(19) Europäisches Patentamt
European Patent Office
Office européen des brevets

(11) **EP 2 044 406 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(21) Anmeldenummer: **06818241.9**

(22) Anmeldetag: **20.07.2006**

(51) Int Cl.:
**G01L 13/00** *(2006.01)* **G01L 15/00** *(2006.01)*
**G01L 27/00** *(2006.01)*

(86) Internationale Anmeldenummer:
**PCT/EP2006/007172**

(87) Internationale Veröffentlichungsnummer:
**WO 2008/009303 (24.01.2008 Gazette 2008/04)**

(54) **VERFAHREN ZUR DIAGNOSE EINER VERSTOPFUNG EINER IMPULSLEITUNG BEI EINEM DRUCKMESSUMFORMER SOWIE DRUCKMESSUMFORMER**

METHOD FOR THE DIAGNOSIS OF A BLOCKAGE OF AN IMPULSE LINE IN A PRESSURE MEASUREMENT TRANSDUCER, AND PRESSURE MEASUREMENT TRANSDUCER

PROCÉDÉ POUR LE DIAGNOSTIC D'UN ENGORGEMENT D'UNE LIGNE D'IMPULSION D'UN CONVERTISSEUR DE PRESSION AINSI QUE LE CONVERTISSEUR DE PRESSION

(84) Benannte Vertragsstaaten:
**DE FR GB**

(43) Veröffentlichungstag der Anmeldung:
**08.04.2009 Patentblatt 2009/15**

(73) Patentinhaber: **SIEMENS AKTIENGESELLSCHAFT**
**80333 München (DE)**

(72) Erfinder: **PAULITSCH, Christoph**
**76133 Karlsruhe (DE)**

(56) Entgegenhaltungen:
**DE-A1-102004 058 424    JP-A- 2004 132 817**
**US-A1- 5 680 109**

• **ZHU H ET AL: "Identification of the transfer characteristic of a differential pressure transmitter using non-parametric methods" CONTROL, 1994. CONTROL '94. VOLUME 1., INTERNATIONAL CONFERENCE ON COVENTRY, UK, LONDON, UK,IEE, UK, 1994, Seiten 681-686, XP006513093 ISBN: 0-85296-610-5**

**Beschreibung**

Die Erfindung betrifft ein Verfahren zur Diagnose einer Verstopfung einer Impulsleitung bei einem (Druck-) Messumformer sowie einen (Druck-)Messumformer, der zur Ausführung des Verfahrens hergerichtet und vorgesehen ist. Druckmessumformer sind an sich bekannt und sind insbesondere zur Messung von Druckveränderungen an einer Unstetigkeitsstelle (siehe z.B. DE 10 2004 058 424 A1), z. B. einer so genannten Messblende, in einer von einer Flüssigkeit oder einem Gas (Fluid) durchströmten Leitung vorgesehen. Solche Druckveränderungen werden über sich an der Messblende ergebende Druckdifferenzen erfasst. Auf Basis einer solchen Differenzdruckmessung ist auch eine Durchflussmessung möglich.

Der Druckmessumformer umfasst als sensorisch wirksames Element einen Drucksensor, der über so genannte Impuls- oder Wirkdruckleitungen an einen Bereich vor und nach der Unstetigkeitsstelle gekoppelt ist. Eine solche Kopplung kann allerdings mit der Zeit nachlassen, z. B. indem die oder einzelne Impulsleitungen verstopfen (clogging, fouling). Eine nachlassende Kopplung ist aber unter Umständen an vom Drucksensor aufgenommenen Messsignalen erkennbar. Soweit die Erfindung also ein Verfahren und eine korrespondierende Vorrichtung zur Diagnose einer Impulsleitung, also insbesondere eine Erkennung einer Verstopfung einer oder mehrerer Impulsleitungen und/oder von Ablagerungen an der Messblende oder einer als Schnittstelle zwischen den Impulsleitungen und dem Druckmessumformer fungierenden Membran und/oder einer etwaigen Membranabrasion betrifft, bezieht sie sich insbesondere auf ein Verfahren und eine korrespondierende Vorrichtung zur Analyse eines diesbezüglichen Kennwertes im Hinblick auf eine Abweichung von oder eine Übereinstimmung mit zumindest einem vorgegebenen oder vorgebbaren Referenzwert. Eine nachlassende oder gestörte Kopplung ist insoweit z. B. anhand eines Maßes für die Übereinstimmung des Kennwertes mit einem solchen Referenzwert oder einer Mehrzahl solcher Referenzwerte erkennbar.

Gattungsgemäße Verfahren oder Vorrichtungen sind allgemein bekannt. Aus der US 5,680,109 ist z. B. bekannt, neben einem Differenzdruckmessumformer einen zusätzlichen Absolutdrucksensor zu verwenden und eine Varianz des Messrauschens mit einem Referenzwert zu vergleichen. In der WO 2001 35174 wird vorgeschlagen, ein unabhängiges Referenzsignal zu ermitteln, dessen Unterschied zum Messsignal Aussagen über eine Verschlechterung der Qualität des Messsignals zulässt. Zur Bewertung des Messsignals ist aus der US 6,532,392 bekannt geworden, das Messsignal mit einem vorbestimmten Wert eines Parameters zu vergleichen und zur abschließenden Bewertung vorgegebene Regeln, Fuzzy-Logik oder neuronale Netze zu verwenden. Aus der WO 97 36215 ist bekannt, einen statistischen Parameter eines digitalisierten Messsignals mittels vorgegebener Regeln, Fuzzy Logik oder neuronalen Netzen zu ermitteln und dann eine Fuzzy-Zugehörigkeitsfunktion auf den statistischen Parameter anzuwenden. Aus der US 6,654,697 ist des Weiteren bekannt, mittels eines moving-average Algorithmus' eine Differenz zwischen einem digitalisierten Messsignal und dem ermittelten Mittelwert zu bestimmen. Aus dieser Differenz werden dann unter Berücksichtigung aktueller und historischer Daten diagnostische Daten ermittelt, wobei in einem Trainingsmodus aus den aktuellen und historischen Daten ein trainierter Datensatz berechnet wird. Aus der US 6,539,267 ist schließlich bekannt, mittels eines Algorithmus' einen statistischen Parameter, wie z. B. Varianz oder Änderungsgeschwindigkeit, zu berechnen und mittels eines Mikroprozessors einen trainierten Wert zu generieren, indem der statistische Parameter während normaler Funktionsweise überwacht wird. Für unterschiedliche Rahmenbedingungen kann der trainierte Parameter dynamisch angepasst werden.

Weiterer Stand der Technik ergibt sich aus folgenden Dokumenten: WO 97 48974; JP 2004 354280; US 6,397,411; US 2002 029,130; US 2004 068,392; US 2004 204,883; US 6,701,274; US 5,570,300; US 5,675,724; US 5,665,899; US 5, 661, 668; US 6,047,220; US 5,956,663; US 5,828,567 und US 5,495,769.

Aus einer älteren, nicht vorveröffentlichten Anmeldung derselben Anmelderin ist zudem ein Verfahren und eine korrespondierende Vorrichtung bekannt, bei der mittels einer Analyseeinrichtung in Bezug auf das oder jedes Messsignal zumindest ein Kennwert ermittelt und der zumindest ein Kennwert mit zumindest einem vorgegebenen oder vorgebbaren Referenzwert verglichen wird. Sodann wird in Abhängigkeit vom Ergebnis des Vergleichs eine vorgegebene oder vorgebbare Aktion ausgelöst. Dazu wird mittels der Analyseeinrichtung eine algebraische Funktion an das Messsignal angepasst und mittels der Analyseeinrichtung als Kennwert zumindest ein Wert eines Parameters in Bezug auf zumindest einen Abschnitt der algebraischen Funktion ermittelt. Diese Anmeldung geht auf denselben Erfinder wie die vorliegende Anmeldung zurück und ist unter demselben Titel wie die vorliegende Anmeldung eingereicht worden.

Die nach dem Stand der Technik verfolgten Ansätze sind insofern noch nicht ganz optimal, als sie - abgesehen von der o. g., nicht vorveröffentlichten Anmeldung - nur einen verschwindend geringen Teil der Historie der jeweils aufgenommenen Messwerte berücksichtigen. Evtl. zeitliche Schwankungen werden dabei häufig sogar gemittelt. Dadurch und eine üblicherweise vorgesehene mathematische Verarbeitung der Messsignale, z. B. Quadrierung, gehen wichtige Informationen hinsichtlich der Phasenlage, also einem evtl. zeitlichen Versatz zwischen mehreren Messsignalen, verloren. Ebenfalls wurden gleiche Historienlängen der zu korrelierenden Messsignale benutzt; jeweils beide der Länge eins oder zwei. Eine Korrelation von Absolutdruckmesssignalen auch der Hoch- und Niederdruckseite wurde nicht betrachtet. Stattdessen wurde eine momentane Kreuzkorrelation eines Absolutdruckmesssignals mit einem Differenzdruckmesssignal oder eine momentane Autokorrelation einzelner aufgenommener Messsignale berücksichtigt. Eine Aufgabe der Erfindung besteht entsprechend darin, eine weitere Ausführungsform zum Betrieb eines Druckmessumformers, insbesondere zur Diagnose einer Verstopfung einer Impulsleitung bei einem Druckmessumformer, sowie einen korrespondierenden Druckmessumformer anzugeben, die bzw. der insbesondere die o. g. Nachteile vermeidet oder zumindest hinsichtlich der jeweiligen Auswirkungen verringert.

Diese Aufgabe wird erfindungsgemäß einerseits mit einem Verfahren mit den Merkmalen des Anspruchs 1 und andererseits mit einer korrespondierenden Vorrichtung zur Ausführung des Verfahrens mit den Merkmalen des Anspruchs 7 gelöst.

Bei einem Verfahren zum Betrieb eines Druckmessumformers, der zumindest mit einer Hochdruck- und einer Niederdruckimpulsleitung an eine im Betrieb von einem Fluid durchströmte Leitung angeschlossen ist, wobei ein vom Druckmessumformer umfasster Drucksensor zumindest ein Messsignal liefert und wobei mittels einer Analyseeinrichtung in Bezug auf das Messsignal zumindest ein Kennwert ermittelt, der zumindest eine Kennwert mit zumindest einem vorgegebenen oder vorgebbaren Referenzwert verglichen und in Abhängigkeit vom Ergebnis des Vergleichs eine vorgegebene oder vorgebbare Aktion ausgelöst wird, oder einem korrespondierenden Verfahren zur Diagnose einer Verstopfung zumindest einer Impulsleitung ist dazu Folgendes vorgesehen: Der Drucksensor liefert als Messsignal ein erstes und zweites Messsignal. Mittels der Analyseeinrichtung werden aufgrund des ersten und zweiten Messsignals Parameter eines ein Übertragungsverhalten der Impulsleitungen beschreibenden Modells ermittelt. Der zur Beurteilung anhand des Referenzwertes vorgesehene Kennwert ergibt sich anhand zumindest einzelner Parameter des Modells.

Das erfindungsgemäße Betriebs- oder Diagnoseverfahren basiert also auf der Erkenntnis, dass im Vergleich zur Verwendung vergleichsweise "einfacher" statistischer Größen, wie der Varianz oder einer Zweipunktkorrelation, Parameter einer Übertragungsfunktion, also einer dem jeweiligen Modell zugrunde liegenden mathematischen Beziehung, weitgehend unabhängig von einer Anregung durch den Prozess, also momentanen Einflüssen, aber in hohem Maße abhängig vom Funktionszustand des Messumformers und einzelner oder mehrerer Impulsleitungen sind. Diese Erkenntnis wird für das erfindungsgemäße Betriebsverfahren oder die von dem Betriebsverfahren umfasste Diagnosemöglichkeit dadurch umgesetzt, dass solche Modellparameter ermittelt werden und ein zur Bewertung des Messumformers vorgesehener Kennwert aus einem oder mehreren dieser Modellparametern abgeleitet wird. Eine Berechnung (Schätzung) von Modellparametern oder jede sonstige Art der Gewinnung solcher Modellparameter erlaubt bei bekannter Geometrie, insbesondere der Impulsleitungen, und gegebenem Modell eine quantitative Abschätzung des Zustands des Messumformers, wobei der Begriff Messumformer zumindest auch die Impulsleitungen einschließt, nämlich z. B. eines Verstopfungsdurchmessers der Impulsleitungen oder einer Einstelldauer eines Durchflussmesswertes. Die aufgenommenen Messsignale werden dabei bei der Ermittlung der Modellparameter zugrunde gelegt. Hinsichtlich der Messsignale sieht die Erfindung die Verwendung mindestens zweier Messsignale vor, damit der Aspekt der Erkennung evtl. zeitlicher Verschiebungen (Phasenverschiebung) ausreichend Berücksichtigung findet.

Anstatt also Kennwerte ohne Phaseninformation zwischen zwei Signalen mit extrem kurzer Signallänge zu ermitteln, werden gemäß der Erfindung Parameter geeigneter Modelle zur Beschreibung des Übertragungsverhaltens der Impulsleitungen ermittelt oder geschätzt. Als Modelle kommen Modelle unterschiedlichster Ordnung, z. B. ein Modell zweiter Ordnung, in Betracht. Zusätzlich oder alternativ kommen als Modelle so genannte autoregressive Modelle, AR-Modelle, oder movingavarage Modelle, MA-Modelle, oder eine Kombination von beiden, ARMA-Modelle, in Betracht. Das jeweilige Modell beschreibt dabei eine Beziehung zwischen den beiden Messsignalen, also z. B. einem Differenzdruckmesssignal und einem Absolutdruckmesssignal oder zwei Absolutdruckmesssignalen. Eine Struktur z. B. eines ARMA-Modells ist gemäß einer der Erfindung zugrunde liegenden Erkenntnis abhängig von den physikalischen Effekten der zu detektierenden Störung. Zur Online-Identifikation einer jeweiligen Störung, also z. B. einer Verstopfung, wird anhand der geschätzten Modellparameter mindestens ein Kennwert ermittelt, der aufgrund der zugrunde liegenden Modellvorstellung einer Störungsart zugeordnet ist und der eine physikalische Interpretation erlaubt.

Ein Vorteil der Erfindung besteht in der besseren Auswertung der in den Messsignalen enthaltenen Informationen und damit in einer qualitativ verbesserten Diagnosemöglichkeit. Zudem muss keine Teststörung eingebracht werden um bei einer Störung einer Messstelle einen Parameter zu ermitteln. Stattdessen wird der Parameter auf Basis eines vorgebbaren Modells und geometrischer, den Druckmessumformer und/oder einzelne oder mehrere Impulsleitungen oder eine Kombination aus Druckmessumformer und der oder jeder Impulsleitung beschreibender Größen bestimmt. Außerdem können mit den geschätzten Modellparametern aufgrund des zugrunde liegenden Modells sowie bekannter geometrischer Größen, z. B. der Länge der Impulsleitungen, Charakteristika des Messumformers, z. B. freier Durchmesser der Impulsleitungen oder Einstellgeschwindigkeit bis zum korrekten Anzeigen des Messwertes, geschätzt und einem Bediener angezeigt werden.

Ein weiterer Vorteil der Erfindung besteht darin, dass durch die Verwendung von Übertragungsmodellen eine Änderung des dynamischen Übertragungsverhaltens der Impulsleitungen oder des Messumformers, z. B. aufgrund von Verstopfungen, Membranabrasion oder -ablagerungen, anhand einer Veränderung der geschätzten Parameter, z. B. Durchmesser der Impulsleitungen, erkennbar ist. Das Übertragungsverhalten beschreibt also einen Funktionszustand des Messumformers. Das Übertragungsverhalten ist dabei zudem größtenteils unabhängig von den jeweiligen Prozessbedingungen, so dass auch die jeweiligen Modelle und die auf dieser Basis geschätzten Parameter weitgehend unabhängig von solchen Prozessbedingungen sind. Des Weiteren besteht eine geringe Unsicherheit bezüglich der jeweils bei der Bewertung des oder jedes Kennwerts zu wählenden Referenzwerts.

Ein Vergleich mit anderen Methoden, die auf das Messsignal von einem Prüfstand angewendet wurden, hat generell bessere Ergebnisse für den Ansatz gemäß der Erfindung gezeigt. Die verglichenen Methoden umfassten eine direkte Identifikation von Parametern aus dem Messsignal, wie Varianz, Mittelwert, Schiefe und Wölbung, oder dem Spektrum des Messsignals und eine Hauptkomponentenkorrelationsanalyse.

Allgemein erlaubt der Ansatz gemäß der Erfindung die Detektion der Verstopfung von Impulsleitungen weitgehend unabhängig von den Betriebsbedingungen und die Angabe eines physikalisch interpretierbaren Kennwerts, wie z. B. Einstelldauer des Messwerts oder verbleibender Leitungsdurchmesser. Dadurch ist ein Vergleichswert einfacher, gegebenenfalls ohne experimentelles Einfügen einer künstlichen Verstopfung, zu bestimmen. Durch die Detektion der Verstopfung der Impulsleitungen können Leitungen gereinigt werden, wenn das Einstellen des Messwertes länger braucht, als zu messende Ereignisse dauern.

Die abhängigen Ansprüche sind auf bevorzugte Ausführungsformen der vorliegenden Erfindung gerichtet. In abhängigen Ansprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass der Drucksensor als erstes und zweites Messsignal ein Differenzdruckmesssignal und ein Absolutdruckmesssignal liefert, wobei das Differenzdruckmesssignal eine Differenz zwischen einem Druck in der Hochdruckimpulsleitung und einem Druck in der Niederdruckimpulsleitung und das Absolutdruckmesssignal einen Druck in der Hoch- oder Niederdruckimpulsleitung, insbesondere der Hochdruckimpulsleitung, abbildet. Alternativ ist vorgesehen, dass der Drucksensor als erstes und zweites Messsignal ein erstes und ein zweites Absolutdruckmesssignal liefert, das den Druck in der Hoch- bzw. Niederdruckimpulsleitung abbildet.

Des Weiteren kann auch vorgesehen sein, dass der Drucksensor auf Basis des ersten und zweites Absolutdruckmesssignals ein Differenzdruckmesssignal als erstes Messsignal und entweder das erste oder zweite Absolutdruckmesssignal als zweites Messsignal liefert. Dabei ergeben sich Vorteile einerseits dahingehend, dass nur zwei Druckmesssignale, nämlich die beiden Absolutdruckmesssignale aufgenommen werden und insoweit auch nur zwei Sensoren nötig sind, und andererseits aufgrund einer nochmals erhöhten Genauigkeit bei der Anwendung des Verfahrens aufgrund der Abhängigkeit des ersten Messsignals vom zweiten Messsignal, wenn nämlich das erste Messsignal eine Differenz aus zwei Absolutdruckmesssignalen und das zweite Messsignal eines der beiden Absolutdruckmesssignale ist.

Weiter bevorzugt ist vorgesehen, dass als Kennwert eine Grenzfrequenz oder eine Dämpfung oder ein Verstärkungsfaktor oder eine vergleichbare physikalische Größe oder ein vergleichbarer Parameter ermittelt wird. Bei solchen Kennwerten handelt es sich um Größen, die eine direkte physikalische Interpretation ermöglichen und damit deren Bewertung vereinfachen. Zudem können solche Kennwerte neben einer automatischen Bewertung im Wege eines Vergleichs mit einem Referenzwert auch als absolute Größen einem Bediener zu dessen Information zur Verfügung gestellt, also z. B. angezeigt werden. Gemäß einer vorteilhaften Ausführungsform der Erfindung ist vorgesehen, dass mehrere Kennwerte ermittelt werden, wobei z. B. ein Vergleich eines ersten Kennwertes mit einem jeweiligen Referenzwert eine Aussage hinsichtlich einer Störung in beiden Impulsleitungen und ein Vergleich eines zweiten Kennwertes mit einem jeweiligen Referenzwert eine Aussage hinsichtlich einer Störung entweder in einer der beiden Impulsleitungen oder in beiden Impulsleitungen ermöglicht. Durch eine logische Verknüpfung beider Aussagen ist dann die Ableitung einer Aussage über eine Störung in einer der beiden Impulsleitungen möglich. Ein Beispiel mag dies erläutern: Nach den Erkenntnissen der Erfindung ergibt sich als Ergebnis einer Auswertung der Dämpfung als Kennwert eine Aussage hinsichtlich einer Blockade in beiden Impulsleitungen (kurz: "beidseitig blockiert"). Des Weiteren ergibt sich als Ergebnis einer Auswertung der Grenzfrequenz als Kennwert eine Aussage hinsichtlich einer Blockade entweder in einer Impulsleitung oder in beiden Impulsleitungen (kurz: "beid- oder einseitig blockiert"). Durch eine logische Verknüpfung beider Ergebnisse, z. B. derart, dass in dem Ergebnis "beid- oder einseitig blockiert" alle "beidseitigen Blockierungen" ausgeblendet werden, ergibt sich ein Ergebnis im Hinblick auf eine einseitige Blockierung. Eine solche Verknüpfung lässt sich durch eine logische UND-Verknüpfung realisieren, wobei einer der beiden Parameter negiert wird. Eine Auswertung entsprechend dieser Ausführungsform der Erfindung erweitert die Genauigkeit und/oder die Aussagekraft der durch das Diagnoseverfahren oder mittels des entsprechend arbeitenden Messumformers erhältlichen Resultate.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombinationen zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen

FIG 1                                einen an eine von einem Fluid durchströmte Leitung angekoppelten Druckmessumformer sowie

FIG 2, FIG 3 und FIG 4      Darstellungen zur Auswertung von Kennwerten, die sich anhand von Parametern eines ein Übertragungsverhalten des Messumformers beschreibenden Modells auf Basis von vom Druckmessumformer aufgenommenen Messsignalen ergeben.

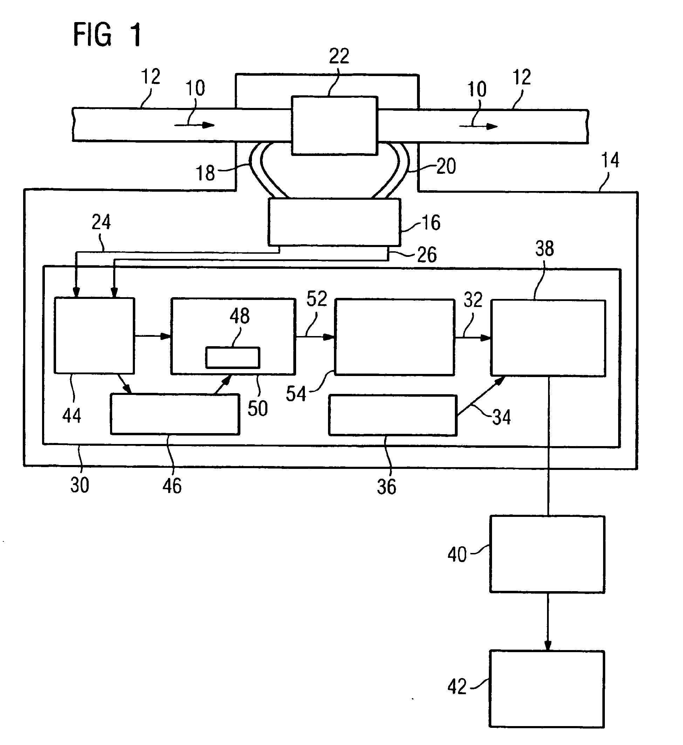

FIG 1 zeigt in schematisch vereinfachter Form einen an eine von einem Fluid 10 durchflossene Leitung 12 angekoppelten Druckmessumformer 14. Der Druckmessumformer 14 umfasst als sensorisch wirksames Element einen Drucksensor 16, der mittels einer ersten und einer zweiten Impulsleitung, im Folgenden als Hoch- und Niederdruckimpulsleitung 18, 20 bezeichnet, an die Leitung 12 gekoppelt ist. Die Hochdruckimpulsleitung 18 greift dabei z. B. stromaufwärts einer Unstetigkeitsstelle, z. B. einer so genannten Messblende 22, an die Leitung 12 an. Die Niederdruckimpulsleitung 20 greift entsprechend stromabwärts der Messblende 22 an die Leitung 12 an. Es kann auch vorgesehen sein, dass beide Impulsleitungen 18, 20 innerhalb einer eine Messscheibe aufweisenden Messblende (nicht dargestellt) an die Leitung 12 angreifen. Dann greift die Hochdruckimpulsleitung 18 stromaufwärts der Messscheibe und die Niederdruckimpulsleitung 20 entsprechend stromabwärts der Messscheibe an die Leitung 12 an.

Der Drucksensor 16 gibt zumindest ein Messsignal 24 im Hinblick auf Druckverhältnisse im Bereich der Messblende 22 ab. Gemäß dem der Erfindung zugrunde liegenden Ansatz ist vorgesehen, dass neben dem Messsignal 24 - im Folgenden zur Unterscheidung als erstes Messsignal 24 bezeichnet - von dem Drucksensor 16 ein zweites Messsignal 26 geliefert wird.

Hinsichtlich des ersten und zweiten Messsignals 24, 26 ist gemäß alternativer, also im Wesentlichen gleichwertiger Ausführungsformen vorgesehen, dass das erste und zweite Messsignal 24, 26 entweder ein Differenzdruckmesssignal 24 und ein Absolutdruckmesssignal 26 ist, wobei das Differenzdruckmesssignal 24 eine Differenz zwischen einem Druck in der Hochdruckimpulsleitung 18 und einem Druck in der Niederdruckimpulsleitung 20 und das Absolutdruckmesssignal 26 den Druck entweder in der Hoch- oder der Niederdruckimpulsleitung 18, 20 abbildet. Bei der alternativen Ausführungsform ist vorgesehen, dass der Drucksensor 16 als erstes und zweites Messsignal 24, 26 ein erstes und ein zweites Absolutdruckmesssignal 24, 26 liefert, das den Druck in der Hoch- bzw. Niederdruckimpulsleitung 18, 20 abbildet.

Das erste und zweite Messsignal 24, 26 wird einer Analyseeinrichtung 30 zugeführt oder ist der Analyseeinrichtung 30 zuführbar. Das erste und zweite Messsignal 24, 26 wird durch die Analyseeinrichtung 30 analysiert und es wird zumindest ein das erste und zweite Messsignal 24, 26 charakterisierender Kennwert 32 ermittelt und in an sich bekannter Art und Weise in geeigneter Form abgespeichert, ausgegeben und/oder weiter verarbeitet. Neben dem Kennwert 32 verwaltet die Analyseeinrichtung 30 auch zumindest einen vorgegebenen oder vorgebbaren Referenzwert 34, der z. B. in einem von der Analyseeinrichtung 30 umfassten Referenzwertspeicher 36 vorgehalten wird. Die Analyseeinrichtung 30 vergleicht, ggf. mittels dafür vorgesehener Vergleichsmittel, z. B. einem Vergleicher 38, den Kennwert 32 mit dem Referenzwert 34 (oder eine Mehrzahl von Kennwerten 32 mit einem Referenzwert 34 oder einen Kennwert 32 mit einer Mehrzahl von Referenzwerten 34 oder eine Mehrzahl von Kennwerten 32 mit einer Mehrzahl von Referenzwerten 34) und löst in Abhängigkeit vom Ergebnis des Vergleichs eine vorgegebene oder vorgebbare Aktion 40, z. B. die Ausgabe eines Warnhinweises, aus, wobei zur Ausgabe eines solchen Warnhinweises eine Ausgabeeinheit 42 oder dergleichen vorgesehen sein kann.

Nachfolgend werden weitere Einzelheiten zur Analyseeinrichtung 30, also davon umfasste Funktionseinheiten und damit assoziierte Funktionalitäten, erläutert. Gemäß der in FIG 1 dargestellten Ausführungsform umfasst die Analyseeinrichtung 30 eine Vorverarbeitungseinheit 44, die neben z. B. einer Digitalisierung des ersten und zweiten Messsignals 24, 26 zur Speicherung einer vorgegebenen oder vorgebbaren Anzahl von Messwerten aus den beiden Messsignalen 24, 26 vorgesehen ist. Die gespeicherten Messwerte werden dabei in einem Signalspeicher 46 vorgehalten.

Für die weitere Beschreibung wird exemplarisch davon ausgegangen, dass der Drucksensor 16 als erstes Messsignal 24 ein Differenzdruckmesssignal 24 und als zweites Messsignal 26 ein sich auf die Hochdruckimpulsleitung 18 beziehendes Absolutdruckmesssignal 26 liefert. Als Formelzeichen für diese beiden Messsignale 24, 26 werden die Buchstaben d bzw. a verwendet. Eine Anzahl gespeicherter Messwerte wird mit N bezeichnet. Zur Beschreibung eines Übertragungsverhaltens der Impulsleitungen 18, 20 wird ein mathematisches Modell 48 zugrunde gelegt, das z. B. einer ersten Funktionseinheit 50 zugeordnet ist, die zur Bestimmung oder Schätzung von Parametern des Modells 48 vorgesehen ist. Im Falle eines Modells 48 zweiter Ordnung ohne Nullstelle und mit zwei Polen werden als Parameter 52 eines solchen Modells 48 die Größen $P_1$, $P_2$, $P_3$ aus $a(i-1)$, $d(i)$, $d(i-1)$ mit z. B. $i=1..20$ als Abtastzeitpunkten anhand der folgenden Beziehung ermittelt:

$$\begin{Bmatrix} P_1 \\ P_2 \\ P_3 \end{Bmatrix} = \begin{bmatrix} a^2(i-1) & a(i-1)a(i-2) & -a(i-1)d(i-2) \\ a(i-2)a(i-1) & a^2(i-2) & -a(i-2)d(i-2) \\ -d(i-2)a(i-1) & -d(i-2)a(i-2) & d^2(i-2) \end{bmatrix}^{-1} \begin{Bmatrix} -a(i)a(i-1) \\ -a(i)a(i-2) \\ a(i)d(i-2) \end{Bmatrix}$$

Die Parameter 52, also die Größen $P_1$, $P_2$, $P_3$, sind nach "Ljung, L.; System Identification - Theory for the User; Prentice Hall, 2. Aufl. 1999" Schätzungen für die Modellparameter eines linearen, so genannten AR Modells 48. Dabei steht "AR" für "autoregressiv". Diesem liegt die folgende mathematische Beschreibung zugrunde,

$$a(i) + P_1\, a(i\text{-}1) + P_2\, a(i\text{-}2) = P_3\, d(i\text{-}2)$$

die die mit der Abtastzeit $T$ diskretisierte Form der nachfolgend angegebenen Beschreibung des kontinuierlichen Frequenzmodells 48

$$(-\omega^2 + 2\xi\omega_g j\omega + \omega^2_g)A = cD$$

ist. Darin sind $A(\omega)$ und $D(\omega)$ die in den Frequenzbereich transformierten Messsignale 24, 26 - $a(t)$, $d(t)$ -, $j$ die so genannte komplexe Einheit und $\omega$ die Signalfrequenz.

Dieses Modell 48 ergibt sich z. B., wenn eine oder mehrere von dem Modell 48 erfassten Größen als behaftet mit einer Massenträgheit $L_h$, einem Reibungsanteil $R_h$ und einer Nachgiebigkeit $C_h$ angesehen werden kann. Zu den von dem Modell 48 erfassten Größen gehören insbesondere das Fluid 10 in der oder jeder Impulsleitung 18, 20, die oder jede Impulsleitung 18, 20, der Druckmessumformer 14, vom Druckmessumformer 14 umfasste Komponenten, wie z. B die Messblende 22, etc. Diese oder ähnliche Größen sind sämtlich vom freien Durchmesser und der Länge der oder jeder Impulsleitung 18, 20 oder Materialeigenschaften des Fluids 10, z. B. Dichte oder Viskosität, abhängig.

Mittels einer zweiten Funktionseinheit 54 sind anhand der mittels der ersten Funktionseinheit 50 ermittelten Parameter 52 ein oder mehrere Kennwerte 32 in Abhängigkeit der Messsignale 24, 26 ermittelbar. Konkret ergibt sich der oder jeder Kennwert 32 anhand der Messsignale 24, 26, weil der oder jeder Parameter 52 das Übertragungsverhalten der Impulsleitungen 18, 20 auf Basis der Messsignale 24, 26 beschreibt und der oder jeder Kennwert 32 sich aufgrund zumindest einzelner Parameter 52 ergibt.

Den damit als Kennwerte 32 aus den Parametern 52 ableitbaren Größen

$$\omega_g = \frac{P_2 - P_1 + 1}{T^2}, \quad \xi = \frac{T}{2}\frac{P_1 - 2}{P_2 + 1 - P_1}, \quad c = P_3$$

ist eine physikalische Interpretation zuordenbar, nämlich als Grenzfrequenz $\omega_g$, Fluiddämpfung in der (jeweiligen) Impulsleitung, im Folgenden kurz als Dämpfung $\xi$ bezeichnet, bzw. Verstärkungsfaktor $c$.

Die in FIG 1 gezeigte Darstellung des Druckmessumformers 14 bezieht sich auf eine Auswertung der Grenzfrequenz $\omega_g$ als Kennwert 32. Die zweite Funktionseinheit 54 ist entsprechend zur Ermittlung der Grenzfrequenz $\omega_g$ vorgesehen. Im Referenzwertspeicher 36 ist als Referenzwert 34 zumindest ein zur Bewertung der Grenzfrequenz $\omega_g$ tauglicher Wert vorgesehen.

Die Grenzfrequenz $\omega_g$ ist umgekehrt proportional zu einer Dauer einer Übertragung in der Impulsleitung. Diese Dauer ist ein Maß dafür, wie lange es dauert, bis sich aufgrund einer Durchflussänderung am Druckmessumformer 14 ein "eingeschwungener Zustand" eingestellt hat. Für eine Bewertung des Kennwertes 32 Grenzfrequenz $\omega_g$ ist dabei ein Grenzwert für eine geschätzte Einstelldauer vorgebbar, die für den jeweiligen Anwendungs- oder Auswertungsfall gerade nicht mehr akzeptabel ist. Die Einstelldauer oder ein aus der Einstelldauer abgeleiteter, zum direkten Vergleich mit der Grenzfrequenz $\omega_g$ tauglicher Wert ist dementsprechend als Referenzwert 34 verwendbar.

Für andere Kennwerte 32, also z. B. Dämpfung $\xi$ oder Verstärkungsfaktor c, gilt das oben Gesagte entsprechend.

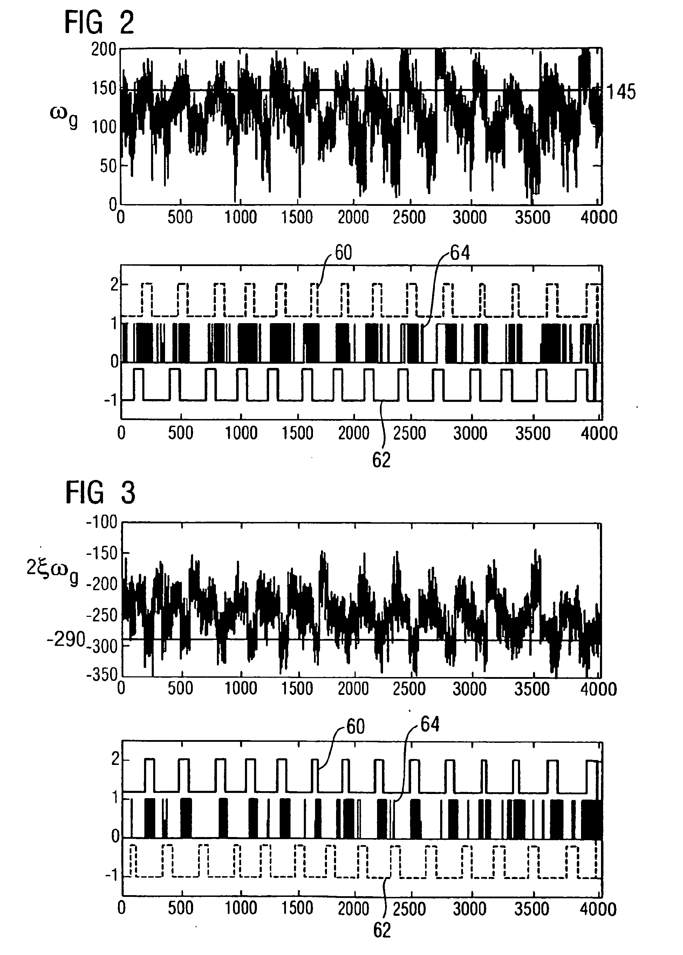

FIG 2 zeigt in einer oberen Darstellung über der Zeit t aufgenommene Werte für die Grenzfrequenz $\omega_g$, wobei die dargestellten Zahlenwerte einzelne Abtastpunkte bezeichnen. Zur Bewertung der jeweiligen Werte für die Grenzfrequenz $\omega_g$ als Kennwert 32 ist ein Referenzwert 34 vorgesehen, der in der oberen Darstellung von FIG 2 als horizontale Linie an der Position "145" eingezeichnet ist. Immer wenn der jeweilige Kennwert 32, also im Falle der Darstellung gemäß FIG 2, die Grenzfrequenz $\omega_g$, den jeweiligen Referenzwert 34, also den Wert von 145, überschreitet, liegt eine Ausnahmesituation in Bezug auf das Übertragungsverhalten der Impulsleitungen 18, 20 vor.

Die obere Darstellung in FIG 2 ist Ergebnis einer Simulation, wobei die Randbedingungen der Simulation in der unteren Darstellung von FIG 2 angegeben sind. Bei gleicher Zeitbasis zeigt die untere Darstellung in FIG 2 drei Graphen 60, 62, 64, wobei ein oberer Graph 60 bei einem "High-Pegel" eine Blockierung beider Impulsleitungen 18, 20 und ein unterer Graph 62 eine Blockierung der Hochdruckimpulsleitung 18 anzeigt. Die Blockierung entweder beider Impulsleitungen 18, 20 oder der Hochdruckimpulsleitung 18 wird dabei für Testzwecke im Rahmen der Simulation erzeugt. Der mittlere Graph 64 von FIG 2 zeigt ein Ergebnis einer anhand einer Betrachtung der Grenzfrequenz $\omega_g$ möglichen Auswertung. Immer wenn der mittlere Graph 64 einen "High-Pegel" aufweist, deutet die Auswertung der Grenzfrequenz $\omega_g$ in Ansehung des jeweiligen Referenzwertes 34 auf eine erkannte Blockade zumindest einer Impulsleitung 18, 20 hin. Anhand eines Vergleichs der in der unteren Darstellung von FIG 2 gezeigten Graphen 60-64 ergibt sich, dass entweder eine Blockierung der Hochdruckimpulsleitung 18 oder eine Blockierung beider Impulsleitungen 18, 20 durch die Auswertung der Grenzfrequenz $\omega_g$ als Kennwert 32 sehr gut erkennbar ist. Es ergeben sich lediglich vereinzelte Fehlauswertungen, z. B. im Bereich von t=300, t=2700 und t=3800.

FIG 3 zeigt eine Darstellung analog zu der Darstellung gemäß FIG 2. Abweichend zu der Darstellung gemäß FIG 2 ist in der oberen Darstellung von FIG 3 nunmehr als Kennwert 32 die Dämpfung $\xi$ als $2\xi\omega_g$ aufgetragen. Auch für einen solchen Kennwert 32 ist ein zugehöriger Referenzwert 34 zu dessen Bewertung vorgesehen. Der Referenzwert 34 ist als horizontale Linie bei "-290" eingetragen. Die drei Graphen 60-64 in der unteren Darstellung in FIG 3 beschreiben wieder (analog zu den bereits im Zusammenhang mit FIG 2 erläuterten Verhältnissen) die gemäß der Simulation zugrunde gelegten Rahmenbedingungen, wobei der obere Graph 60 Zeitpunkte angibt, zu denen beide Impulsleitungen 18, 20 blockiert sind und der untere Graph 62 Zeitpunkte angibt, zu denen die Hochdruckimpulsleitung 18 blockiert ist. Im mittleren Graph 64 ist angeben, wann aufgrund einer Auswertung der Dämpfung $\xi$ als Grenzwert 32 in Ansehung des zugrunde gelegten Referenzwertes 34 bei "-290" eine Blockierung erkannt wird. Die Detektierung erfolgt, wie auch bei FIG 2, aufgrund der Benutzung von N Messwerten etwas zeitverzögert. Wie auch bei der Darstellung in FIG 2 gibt es einige wenige Positionen, bei denen es aufgrund einer Bewertung der Dämpfung $\xi$ als Kennwert 32 zu Fehlauswertungen kommt. Dies ist bei der dargestellten Situation, z. B. im Bereich von t=2000 und t=3400 der Fall.

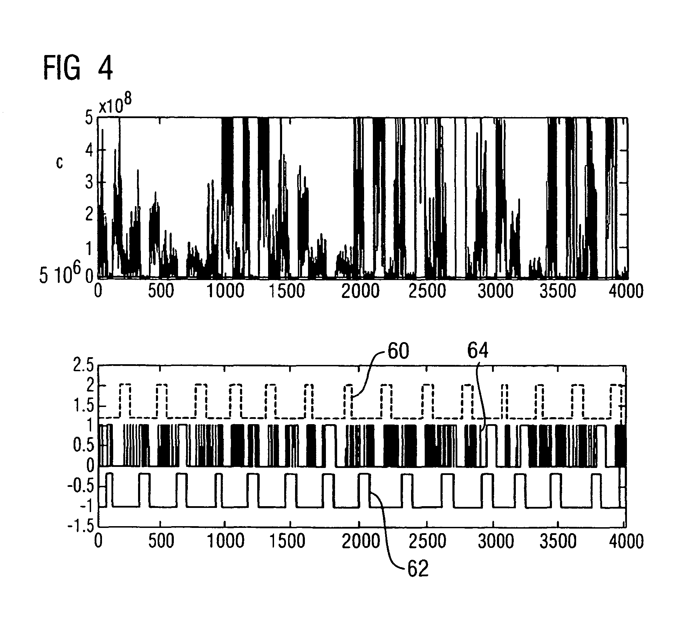

FIG 4 zeigt eine Darstellung analog zu den Darstellungen gemäß FIG 2 und FIG 3 auf gleicher Zeitbasis. Die Darstellung in FIG 4 bezieht sich auf eine Auswertung des Verstärkungsfaktors c als Kennwert 32. Dem Kennwert 32 ist als Referenzwert 34 der Zahlenwert "5 x $10^6$" zugeordnet. Die untere Darstellung in FIG 4 beschreibt die bei der Simulation generierten Rahmenbedingungen, also anhand des oberen Graphen 60 Zeitpunkte, zu denen beide Impulsleitungen 18, 20 blockiert sind, und anhand des unteren Graphen 62 Zeitpunkte, zu denen die Hochdruckimpulsleitung 18 blockiert ist. Der mittlere Graph 64 gibt wiederum das Ergebnis der Auswertung des Verstärkungsfaktors c als Kennwert 32 wieder. Auch bei dieser Auswertung kommt es zu einigen wenigen Fehlauswertungen, z. B. im Bereich von t=300, t=600, t=900, t=2300, t=3600 und t=3700.

Die Auswertung der Dämpfung $\xi$ als Kennwert 32 liefert ein Ergebnis, das anzeigt, dass beide Impulsleitungen 18, 20 blockiert sind (vergleiche FIG 3). Die Auswertung der Grenzfrequenz $\omega_g$ als Kennwert 32 (vergleiche FIG 2) liefert ein Ergebnis, das entweder eine beidseitige oder eine einseitige Blockierung anzeigt, also bei einem sich auf die Hochdruckimpulsleitung 18 beziehenden Absolutdrucksignals 26 eine Blockierung der Hochdruckimpulsleitung 18. Durch eine logische Verknüpfung des Ergebnisses "beidseitig blockiert" der Auswertung gemäß FIG 2 mit dem Ergebnis "beid- oder einseitig blockiert" der Auswertung gemäß FIG 3 ist ein Ergebnis erhältlich, das eine einseitige Blockierung anzeigt.

Ein entsprechendes Ergebnis ist erhältlich, wenn anstelle des Ergebnisses der Auswertung gemäß FIG 2 das Ergebnis der Auswertung gemäß FIG 4, das ebenfalls eine beid- oder einseitige Blockierung anzeigt, zusammen mit einer Auswertung der Situation gemäß FIG 3 zugrunde gelegt wird.

Damit lässt sich die Erfindung kurz wie folgt darstellen: Es wird ein Verfahren zur Erkennung oder Diagnose einer Verstopfung einer Impulsleitung bei einem Druckmessumformer 14 sowie ein korrespondierender Druckmessumformer 14 angegeben, bei dem zur Analyse zumindest eines Messsignals 24, 26 zumindest ein Kennwert 32 mit zumindest einem Referenzwert 34 verglichen und in Abhängigkeit vom Ergebnis des Vergleichs eine Aktion 40 ausgelöst wird, wobei sich der oder jeder Kennwert 32 anhand zumindest einzelner Parameter 52 eines ein Übertragungsverhalten von Impulsleitungen 18, 20, mit denen der Druckmessumformer 14 an eine von einem Fluid 10 durchströmte Leitung 12 gekoppelt ist, beschreibenden Modells 48 ergibt.

**Patentansprüche**

1. Verfahren zum Betrieb eines Druckmessumformers (14), der zumindest mit einer Hochdruck- und einer Niederdruckimpulsleitung (18, 20) an eine Leitung (12) angeschlossen ist, wobei ein vom Druckmessumformer (14) umfasster Drucksensor (16) zumindest ein Messsignal (24; 26) liefert und wobei mittels einer Analyseeinrichtung (30)

   - in Bezug auf das Messsignal (24; 26) zumindest ein Kennwert (32) ermittelt wird,
   - der zumindest eine Kennwert (32) mit zumindest einem vorgegebenen oder vorgebbaren Referenzwert (34) verglichen und
   - in Abhängigkeit vom Ergebnis des Vergleichs eine vorgegebene oder vorgebbare Aktion (40) ausgelöst wird,

   **dadurch gekennzeichnet, dass**
   der Drucksensor (16) als Messsignal (24; 26) ein erstes und zweites Messsignal (24, 26) liefert,
   dass mittels der Analyseeinrichtung (30) aufgrund des ersten und zweiten Messsignals (24, 26) Parameter (52) eines ein Übertragungsverhalten der Impulsleitungen (18, 20) beschreibenden Modells (48) ermittelt werden und dass der Kennwert (32) sich anhand zumindest einzelner Parameter (52) ergibt.

2. Verfahren nach Anspruch 1,
   wobei der Drucksensor (16) als erstes und zweites Messsignal (24, 26) ein Differenzdruckmesssignal und ein Absolutdruckmesssignal liefert, wobei das Differenzdruckmesssignal eine Differenz zwischen einem Druck in der Hochdruckimpulsleitung (18) und einem Druck in der Niederdruckimpulsleitung (20) und das Absolutdruckmesssignal den Druck in der Hoch- oder Niederdruckimpulsleitung (18, 20) abbildet.

3. Verfahren nach Anspruch 1,
   wobei der Drucksensor (16) als erstes und zweites Messsignal (24, 26) ein erstes und ein zweites Absolutdruckmesssignal liefert, das den Druck in der Hoch- bzw. Niederdruckimpulsleitung (18, 20) abbildet.

4. Verfahren nach Anspruch 3,
   wobei der Drucksensor (16) auf Basis des ersten und zweites Absolutdruckmesssignals ein Differenzdruckmesssignal als erstes Messsignal (24) und entweder das erste oder zweite Absolutdruckmesssignal als zweites Messsignal (26) liefert.

5. Verfahren nach einem der Ansprüche 1, 2, 3 oder 4,
   wobei als Kennwert (32) eine Grenzfrequenz oder eine Dämpfung oder ein Verstärkungsfaktor ermittelt wird.

6. Verfahren nach Anspruch 5,
   wobei mehrere Kennwerte (32) ermittelt werden, wobei ein Vergleich eines ersten Kennwertes (32) mit einem jeweiligen Referenzwert (34) eine Aussage hinsichtlich einer Störung in beiden Impulsleitungen (18, 20) und ein Vergleich eines zweiten Kennwertes (32) mit einem jeweiligen Referenzwert (34) eine Aussage hinsichtlich einer Störung entweder in einer der beiden Impulsleitungen (18, 20) oder in beiden Impulsleitungen (18, 20) ermöglicht, wobei eine logische Verknüpfung beider Aussagen eine Aussage über eine Störung in einer der beiden Impulsleitungen (18, 20) ergibt.

7. Druckmessumformer, der mit mindestens einer Hoch- und einer Niederdruckimpulsleitung (18, 20) an eine Leitung (12) anschließbar ist,
   mit einem Drucksensor (16) zur Abgabe eines Messsignals (24) und einer Analyseeinrichtung (30)

   - zur Ermittlung zumindest eines Kennwerts (32) in Bezug auf das Messsignal (24) und
   - zum Vergleich des zumindest einen Kennwerts (32) mit zumindest einem vorgegebenen oder vorgebbaren Referenzwert (34) sowie
   - zum Auslösen einer vorgegebenen oder vorgebbaren Aktion (40) in Abhängigkeit vom Ergebnis des Vergleichs,

   **dadurch gekennzeichnet,**
   **dass** der Drucksensor (16) zur Abgabe eines ersten und zweiten Messsignals (24, 26) als Messsignal (24) vorgesehen ist,
   **dass** mittels der Analyseeinrichtung (30) aufgrund des ersten und zweiten Messsignals (24, 26) Parameter (52) eines ein Übertragungsverhalten der Impulsleitungen (18, 20) beschreibenden Modells (48) ermittelbar sind und

**dass** der Kennwert (32) sich anhand zumindest einzelner Parameter (52) ergibt.

8. Computerprogramm mit durch einen Computer ausführbaren Programmcodeanweisungen zur Implementierung des Verfahrens nach einem der Ansprüche 1 bis 6 wenn das Computerprogramm auf einem Computer ausgeführt wird.

9. Computerprogrammprodukt, insbesondere Speichermedium, mit einem durch einen Computer ausführbaren Computerprogramm gemäß Anspruch 8.

**Claims**

1. Method for operating a pressure transducer (14) which is connected to a pipe (12) at least by a high-pressure and a low-pressure impulse line (18, 20),
   wherein a pressure sensor (16) incorporated by the pressure transducer (14) supplies at least one measurement signal (24; 26) and
   wherein by means of an analysis device (30)

   - at least one characteristic value (32) is determined in relation to the measurement signal (24; 26),
   - the at least one characteristic value (32) is compared with at least one predefined or predefinable reference value (34) and
   - depending on the result of the comparison, a predefined or predefinable action (40) is initiated,

   **characterised in that**
   the pressure sensor (16) supplies, as the measurement signal (24; 26), a first and second measurement signal (24, 26),
   that, by means of the analysis device (30), parameters (52) of a model (48) describing a response of the impulse lines (18, 20) are determined on the basis of the first and second measurement signal (24, 26) and
   that the characteristic value (32) is produced on the basis of at least individual parameters (52).

2. Method according to claim 1,
   wherein the pressure sensor (16) supplies a differential pressure measurement signal and an absolute pressure measurement signal as the first and second measurement signal (24, 26), the differential pressure measurement signal representing a difference between a pressure in the high-pressure impulse line (18) and a pressure in the low-pressure impulse line (20) and the absolute pressure measurement signal representing the pressure in the high- or low-pressure impulse line (18, 20).

3. Method according to claim 1,
   wherein the pressure sensor (16) supplies, as the first and second measurement signal (24, 26), a first and a second absolute pressure measurement signal which represents a pressure in the high-pressure impulse line and the low-pressure impulse line (18, 20) respectively.

4. Method according to claim 3,
   wherein, on the basis of the first and second absolute pressure measurement signal, the pressure sensor (16) supplies a differential pressure measurement signal as the first measurement signal (24) and either the first or second absolute pressure measurement signal as the second measurement signal (26).

5. Method according to one of claims 1, 2, 3 or 4,
   wherein a cutoff frequency or a damping or a gain factor is determined as the characteristic value (32).

6. Method according to claim 5,
   wherein a plurality of characteristic values (32) are determined, a comparison of a first characteristic value (32) with a respective reference value (34) enabling a conclusion to be drawn in respect of a fault in both impulse lines (18, 20) and a comparison of a second characteristic value (32) with a respective reference value (34) enabling a conclusion to be drawn in respect of a fault either in one of the two impulse lines (18, 20) or in both impulse lines (18, 20), wherein a logical combination of both conclusions produces a conclusion concerning a fault in one of the two impulse lines (18, 20).

**7.** Pressure transducer which can be connected to a pipe (12) by at least one high- and low-pressure impulse line (18, 20), comprising a pressure sensor (16) for delivering a measurement signal (24) and an analysis device (30)

- for determining at least one characteristic value (32) relating to the measurement signal (24) and
- for comparing the at least one characteristic value (32) with at least one predefined or predefinable reference value (34) and
- for initiating a predefined or predefinable action (40) depending on the result of the comparison,

**characterised in that**
the pressure sensor (16) is designed to deliver a first and second measurement signal (24, 26) as the measurement signal (24),
parameters (52) of a model (48) describing a response of the impulse lines (18, 20) can be determined by means of the analysis device (30) on the basis of the first and second measurement signal (24, 26) and
the characteristic value (32) is produced on the basis of at least individual parameters (52).

**8.** Computer program with computer-executable program code instructions for implementing the method according to one of claims 1 to 6 when the computer program is run on a computer.

**9.** Computer program product, in particular storage medium, with a computer-executable computer program according to claim 8.


**Revendications**

**1.** Procédé pour faire fonctionner un convertisseur ( 14 ) de pression, qui est raccordé à une ligne ( 12 ), au moins par une ligne ( 18 ) d'impulsion de haute pression et par une ligne ( 20 ) d'impulsion de basse pression, un capteur ( 16 ) de pression compris dans le convertisseur ( 14 ) de pression fournissant au moins un signal ( 24 ; 26 ) de mesure et dans lequel au moyen d'un dispositif ( 30 ) d'analyse

- on détermine, en se rapportant au signal ( 24 ; 26 ) de mesure, au moins une valeur ( 32 ) caractéristique,
- on compare la au moins une valeur ( 32 ) caractéristique à au moins une valeur ( 34 ) de référence prescrite ou pouvant l'être et
- en fonction du résultat de la comparaison, on déclenche une action ( 40 ) prescrite ou pouvant l'être,

**caractérisé en ce que**
le capteur ( 16 ) de pression fournit, comme signal ( 24 ; 26 ) de mesure, un premier et un deuxième signal ( 24 ; 26 ) de mesure,
**en ce qu'**au moyen du dispositif ( 30 ) d'analyse et sur la base du premier et du deuxième signal ( 24 ; 26 ) de mesure, on détermine des paramètres ( 52 ) d'un modèle ( 48 ) décrivant un comportement de transmission des lignes ( 18, 20 ) d'impulsion et
**en ce que** la valeur ( 32 ) caractéristique est obtenue au moyen d'au moins divers paramètres ( 52 ).

**2.** Procédé suivant la revendication 1,
dans lequel le capteur ( 16 ) de pression fournit, comme premier et deuxième signal ( 24 ; 26 ) de mesure, un signal de mesure de pression différentielle et un signal de mesure de pression absolu, le signal de mesure de pression différentielle reproduisant une différence entre une pression dans la ligne ( 18 ) d'impulsion de haute pression et une pression dans la ligne ( 20 ) d'impulsion de basse pression et le signal de mesure de pression absolu reproduisant la pression dans la ligne ( 18 ) d'impulsion de haute pression ou dans la ligne ( 20 ) d'impulsion de basse pression.

**3.** Procédé suivant la revendication 1,
dans lequel le capteur ( 16 ) de pression fournit, comme premier et deuxième signal ( 24 ; 26 ) de mesure, un premier et un deuxième signal de mesure de pression absolu, qui reproduit la pression dans la ligne ( 18 ) d'impulsion de haute pression et dans la ligne ( 20 ) d'impulsion de basse pression.

**4.** Procédé suivant la revendication 3,
dans lequel le capteur ( 16 ) de pression fournit, sur la base du premier et du deuxième signal de mesure de pression absolu, un signal de mesure de pression différentielle en tant que premier signal ( 24 ) de mesure et soit le premier ou le deuxième signal de mesure de pression absolu comme deuxième signal ( 26 ) de mesure.

**5.** Procédé suivant l'une des revendications 1, 2, 3 ou 4,
dans lequel on détermine comme valeur ( 32 ) caractéristique, une fréquence limite ou un amortissement ou un facteur d'amplification.

**6.** Procédé suivant la revendication 5,
dans lequel on détermine plusieurs valeurs ( 32 ) caractéristiques, une comparaison d'une première valeur ( 32 ) caractéristique à une valeur ( 34 ) de référence respective rendant possible une prévision d'une perturbation dans les deux lignes ( 18, 20 ) d'impulsion et une comparaison d'une deuxième valeur ( 32 ) caractéristique à une valeur ( 34 ) de référence respective rendant possible une prévision concernant une perturbation, soit dans l'une des deux lignes ( 18, 20 ) d'impulsion, soit dans les deux lignes ( 18, 20 ) d'impulsion, une combinaison logique des deux prévisions donnant une prévision sur une perturbation dans l'une des deux lignes ( 18, 20 ) d'impulsion.

**7.** Convertisseur de pression, qui peut être raccordé à une ligne ( 12 ) par au moins une ligne ( 18 ) d'impulsion de haute pression et par une ligne ( 20 ) d'impulsion de basse pression,
comprenant un capteur ( 16 ) de pression pour l'émission d'un signal ( 24 ) de mesure et un dispositif ( 30 ) d'analyse,

- pour la détermination d'au moins une valeur ( 32 ) caractéristique en se rapportant au signal ( 24 ) de mesure et
- pour la comparaison de la au moins une valeur ( 32 ) caractéristique à au moins une valeur ( 34 ) de référence prescrite ou pouvant l'être, ainsi que
- pour le déclenchement d'une action ( 40 ) prescrite pouvant l'être en fonction du résultat de la comparaison, **caractérisé en ce que**

le capteur ( 16 ) de pression est prévu pour l'émission d'un premier et d'un deuxième signal ( 24 ; 26 ) de mesure, comme signal ( 24 ) de mesure,
**en ce qu'**au moyen du dispositif ( 30 ) d'analyse et sur la base du premier et du deuxième signal ( 24 ; 26 ) de mesure, des paramètres ( 52 ) d'un modèle ( 48 ) décrivant un comportement de transmission des lignes ( 18, 20 ) d'impulsion peuvent être déterminés et
**en ce que** la valeur ( 32 ) caractéristique est obtenue au moyen d'au moins divers paramètres ( 52 ).

**8.** Programme informatique ayant des instructions de code de programme pouvant être exécutées sur un ordinateur pour la mise en ouvre du procédé suivant l'une des revendications 1 à 6, lorsque le programme informatique est réalisé sur un ordinateur.

**9.** Produit de programme informatique, notamment supports de mémoire, comprenant un programme informatique suivant la revendication 8 pouvant être réalisé par un ordinateur.

FIG 1

## FIG 2

## FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004058424 A1
- US 5680109 A
- WO 200135174 A
- US 6532392 B
- WO 9736215 A
- US 6654697 B
- US 6539267 B
- WO 9748974 A
- JP 2004354280 A
- US 6397411 B
- US 2002029130 A
- US 2004068392 A
- US 2004204883 A
- US 6701274 B
- US 5570300 A
- US 5675724 A
- US 5665899 A
- US 5661668 A
- US 6047220 A
- US 5956663 A
- US 5828567 A
- US 5495769 A